Europäisches Patentamt

European Patent Office

Office européen des brevets

(19)

(11) **EP 1 050 130 B1**

(12) **EUROPEAN PATENT SPECIFICATION**

(45) Date of publication and mention
of the grant of the patent:
**10.12.2003  Bulletin 2003/50**

(51) Int Cl.⁷: **H04J 14/02**, H04Q 11/00,
H04B 10/207, H04B 10/213

(21) Application number: **99901053.1**

(22) Date of filing: **15.01.1999**

(86) International application number:
**PCT/GB99/00140**

(87) International publication number:
**WO 99/037050 (22.07.1999 Gazette 1999/29)**

(54) **COMMUNICATIONS SYSTEM WITH STAR / RING TOPOLOGY**

KOMMUNIKATIONSSYSTEM MIT STERN / RING TOPOLOGY

SYSTEME DE COMMUNICATION AVEC TOPOLOGIE EN ETOILE/EN ANNEAU

(84) Designated Contracting States:
**BE DE ES FR GB NL**

(30) Priority: **20.01.1998  GB 9801209**
**18.02.1998  GB 9803458**

(43) Date of publication of application:
**08.11.2000  Bulletin 2000/45**

(73) Proprietor: **BRITISH TELECOMMUNICATIONS**
**public limited company**
**London EC1A 7AJ (GB)**

(72) Inventor: **HILL, Alan Michael**
**Woodbridge, Suffolk IP13 6TP (GB)**

(74) Representative: **Wallin, Nicholas James et al**
**BT Group Legal Services,**
**Intellectual Property Department,**
**8th Floor,**
**120 Holborn**
**London EC1N 2TE (GB)**

(56) References cited:
**EP-A- 0 458 628**      **EP-A- 0 599 177**
**WO-A-95/19689**      **WO-A-98/33287**
**DE-A- 19 537 103**      **US-A- 5 502 586**

• **PATENT ABSTRACTS OF JAPAN vol. 008, no.**
**013 (E-222), 20 January 1984 -& JP 58 177041 A**
**(NIPPON DENKI KK), 17 October 1983**

EP 1 050 130 B1

**Description**

BACKGROUND TO THE INVENTION

The present invention relates to a communications system which employs a network which has a star topology, and which is suitable for use with wavelength division multiplexing (WDM), as well as with other optical transmission technologies.

WDM has attracted considerable interest as a technology which potentially makes it possible to utilise fully and flexibly the bandwidth available on optical networks. Its use has been proposed, for example, in the core network which interconnects trunk switches in a national telecommunications network. A variety of different network structures and switching techniques are possible for implementing a WDM network. These include a star network which may, for example, have connections from N nodes converging on a single NxN WDM router at the hub. An alternative structure is a WDM add/drop multiplex (ADM) ring in which each node adds and drops wavelength channels to and from other nodes. Further alternatives include a WDM broadcast-and-select ring, and an arbitrary mesh. In selecting an appropriate structure, a number of requirements have to be met. Together with the fundamental need to accommodate a suitable number of channels using a channel spacing which can readily be realised, it is important to minimise the cost of the components making up the network. In particular, for a network which is large enough to cover the country, the total length of the fibres used is a major determinant of cost. Another important consideration is the resilience of the network, that is its ability to continue functioning after the failure of one or more components. Hitherto it has proved difficult to reconcile these two criteria: networks which have sufficient redundancy to withstand component failures have required relatively greater lengths of fibres and larger amounts of other components.

EP 0599177-A discloses an optical star and ring network wherein the star network is used for the transmission of data traffic between nodes, and the ring network is used for the transmission of wavelength control information, either by electrical or optical means.

SUMMARY OF THE INVENTION

According to a first aspect of the present invention there is provided an optical communications system comprising:

a) an optical network having a star topology;
b) a plurality of nodes which are located at the periphery of the optical network having a star topology, and which are arranged to communicate optical signals with other nodes via said optical network;
c) routing means connected via the said network to the plurality of nodes and located at the hub of the said network; and
d) an optical ring network interconnecting at least some of the said plurality of nodes; said system being characterised in that:

one or more of the said plurality of nodes is arranged to direct traffic for another of the said nodes which is separated from the said node by less than a predetermined distance via the said optical ring network, and to direct traffic for another of the said nodes which is separated from the said node by more than the predetermined distance via the optical network having a star topology.

The present invention provides a network which needs reduced fibre lengths by comparison, for example, with conventional add/drop ring networks, but which in preferred embodiments provides enhanced resilience and flexibility in operation. This is achieved by using in combination both a star network and a ring network. For connections between nodes that are relatively closer, traffic is carried via the ring, whilst the star network is used for connections where the star structure requires less. fibre than a ring connection. In this way the overall fibre lengths required for the network, and hence the capital costs of the network, are significantly reduced.

Preferably the optical ring network is an add/drop wavelength division multiplexed ring network.

Preferably the system further comprises peripheral transmission paths interconnecting at least some of the plurality of nodes and arranged to carry protection traffic in the event of failure of a component in the optical communications system.

This preferred feature of the invention enhances the resilience of the network by adding to the basic star topology peripheral transmission paths which interconnect the nodes directly, that is to say without going through the hub of the network. This configuration makes it possible to ensure that the capacity on the main connections between the nodes and the hub is fully used, for example by diverting some traffic from one node and aggregating it with trafffic from another node before directing to the hub. It also provides an increased range of options for the diversion of standby traffic in response to network or router failures. Analysis by the inventor has shown that using this configuration, a desired degree of protection against failure can be achieved using reduced lengths of optical fibres, and hence at reduced capital cost. The invention is not limited to use with WDM networks, but also gives advantages when used, for example in the context of an optical network carrying time-division multiplexed SDH (synchronous digital hierarchy) traffic.

The present invention also encompasses methods of operating systems constructed in accordance with the first aspect of the invention.

DESCRIPTION OF THE DRAWINGS

Systems and methods embodying the present invention will now be described in further detail, by way of example only, with reference to the accompanying drawings, in which:

Figure 1 is a schematic of a prior art communications system employing a star network:
Figure 2 is a schematic of a network for use in a system embodying the present invention;
Figure 3 is a diagram showing a multiplexer/demultiplexer suitable for use in the network of Figure 3;
Figure 4 is a schematic of an alternative multiplexer/demultiplexer structure;
Figure 5 is a schematic of a further alternative multiplexer/demultiplexer structure;
Figure 6 is a schematic showing a second example of a network embodying the present invention;
Figure 7 shows the switching paths at one of the switch nodes of Figure 6;
Figure 8 is a circuit diagram for an experimental implementation of the system of Figure 7; and
Figure 9 is a schematic showing a third example of a network embodying the invention;
Figure 10 is a schematic showing a fourth example of a network embodying the invention;
Figure 11 shows the distribution of channels from one node between working routers;
Figures 12a and 12b show examples of routers implementing the distribution scheme of Figure 11;
Figure 13 is a schematic showing a criterion for the connection of nodes in a hybrid ring/star topology;
Figure 14 is an example of a network constructed in accordance with the criterion of Figure 13.

DESCRIPTION OF EXAMPLES

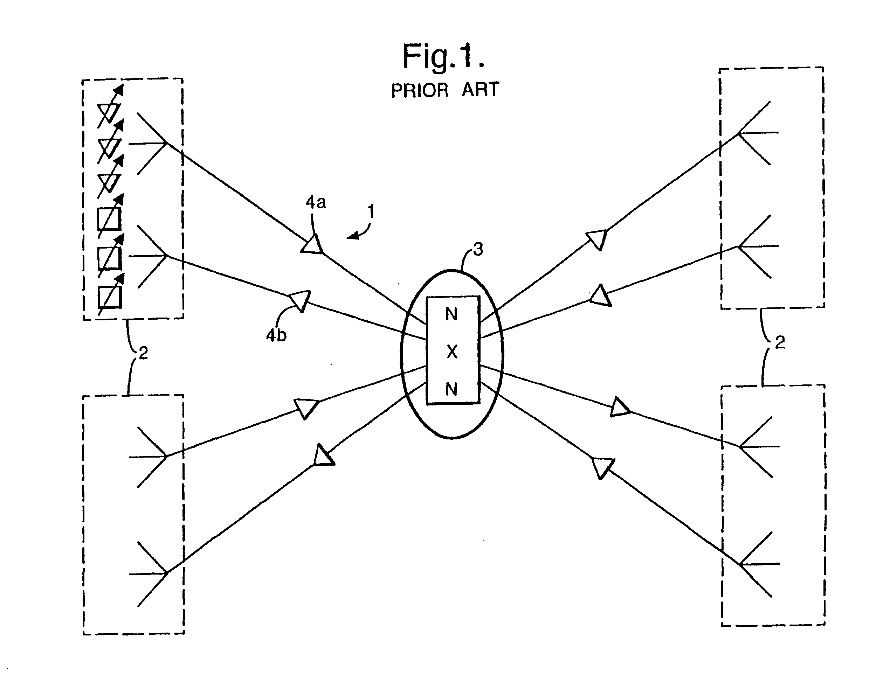

As shown in Figure 1, a conventional communications system includes an optical fibre network 1 which has a star topology. A number of nodes 2 are positioned at different locations at the periphery of the network. The nodes 2 are connected via the optical fibre network 1 to a router 3 which is located at the hub of the network. In this example, the router is an NxN passive wavelength division multiplexing router. It interconnects N inputs and N outputs, where N is chosen to be equal to the number of nodes in the network. In the branches of the optical fibre network 1, optical amplifiers 4a, 4b are included so that the network operates transparently, that is without opto-electronic conversion and regeneration. Each of the nodes 2 includes a number of transmitter terminals and receiver terminals. The wavelengths of operation of the transmitters and receivers are variable.

In use, when one of the nodes is to route traffic to another one of the nodes, then a transmitter terminal at the originating node is tuned to a wavelength channel which is selected in dependence upon the intended destination. The signal is then output in the optical domain by the selected terminal, is combined with other wavelength channels from other transmitter terminals, and travels along the outgoing fibre in the respective branch of the optical fibre network 1. At the hub of the network, the fibre from the originating node is connected to one of the N input ports of the router 3. The router directs the signal internally to one of the N output ports. Which output port is used depends on the wavelength of the signal. The signal then passes over the optical fibre network to the destination node. The destination node separates each wavelength channel, e.g. by means of a wavelength demultiplexer or a splitter and set of tunable filters. Completely non-blocking operation is obtained, for any traffic matrix between nodes, by employing wavelength conversion between dummy ports around the router.

In this conventional communications system, and also in systems embodying the invention, the variable transmitters and receivers may be replaced by sets of fixed wavelength transmitters and receivers, with different transmitters and receivers operating at different wavelengths. Such a system still functions generally as described above, but with a reduced degree of flexibility. Where fixed wavelength operation is used, then wavelength multiplexers may be used to join, e.g., groups of transmitter terminals to an outgoing optical fibre.

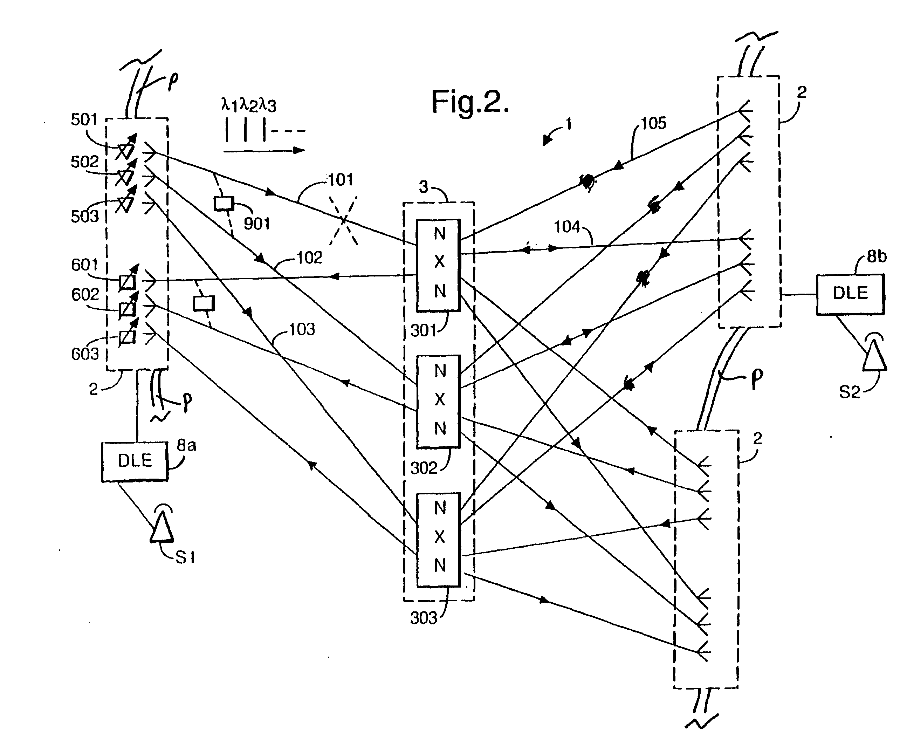

Figure 2 shows a communications system using a star topology with peripheral transmission paths. As in the network of Figure 1, an optical fibre network 1 with a star topology links nodes 2 to the hub 3 of the network. In addition to the connections 101-105 which extend directly from the nodes 2 to the hub, the network also includes peripheral transmission paths P which directly interconnect adjacent nodes 2, and which in combination form a ring which connects all of the nodes 2. Also in this network, instead of a single NxN router, the hub comprises a number of NxN routers, each of which is still connected to all of the N nodes but each of which now receives traffic from only a subset of the terminals within each node. This structure for the hub is described and claimed in the present applicant's co-pending British application number 9701591.1 filed 27 Jan 1997, BT reference A25353. The total capacity of all of the routers, in terms of the number of different channels which can be handled by the routers, is greater than the total capacity of the N nodes. The Figure shows how, at each of the nodes, the transmitter terminals and receiver terminals are divided into groups. By way of illustration, in the node which is referenced a first group of transmitter terminals 501 have their outputs coupled by a non-wavelength selective fibre couplers onto the outgoing optical fibre which is referenced 101. That optical fibre is connected to an input in the first one of the routers, which router is referenced 301. A second group of transmitter terminals 502 are coupled via a second optical fibre 102 to a second router 302, and the third group of transmitter terminals 503 are connected via a third optical fibre 103 to a third router 302. In a similar manner, receiver terminal groups 601, 602, 603 are connected to outputs of routers 301, 302 and 303 respectively. Optical switches are connected between the different branches of the network. As described in further detail below, the switches may be operated to bypass one or more of the fibre paths and/or one or more of the routers in the event of a component failure.

In relation to the topology of the network, all of the NxN routers are located at the hub of the network. However, advantageously different physical locations are used for the different routers. The routers may be divided between several sites, or each router may be sited individually. In the UK core network, for example, the different sites may all be located within a 10km radius of the geographical centre of the network. The use of different sites further enhances the resilience of the system by reducing the effects on the system of, e.g., accidental damage or fire at a single site.

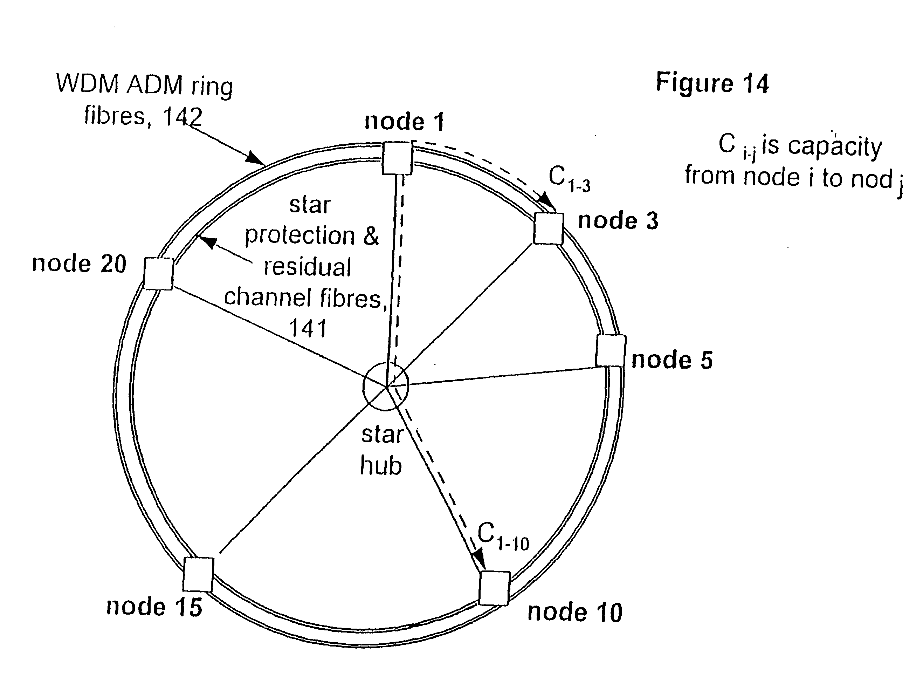

As shown in Figure 14, in addition to the star network and peripheral transmission paths so far described, a network embodying the invention includes also an add/drop ring network, so that the system as a whole has a hybrid ring/star topology. Although in the star network described with reference to Figure 2, fibres are provided around the perimeter of the star network and appear like a ring connecting the nodes, these are used for protection purposes relating to the star network. In the ring network of Figure 14, by contrast, the ring is used to enable some connections to bypass the star network entirely. Analysis by the inventor has found that for some connections between node pairs that are relatively close together around the perimeter, the amount of fibre needed to connect them around a ring can be less than the fibre quantity required via a star hub. For connections between such node pairs it is beneficial to provide the node-node connections via a conventional WDM ADM ring, while the other node-node connections for which the star structure requires the lesser fibre are connected via the star. This embodiment therefore makes further fibre savings by using both star network and ring network in combination, with particular node-node connections carried over whichever of the two produces the lesser fibre quantities for the particular node-node connections. The criterion for choosing the appropriate type of connection depends not only on the physical distances between node pairs via each network, but also on the fibre protection requirements of each network have also to be accounted for. An appropriate design rule is stated as follows: those node-node connections for which the total fibre requirements (including protection fibre) are less via a WDM ADM ring should be carried over a ring, while those for which the total fibre requirements ale less via a star should be carried over a star network. An optimum solution may then be arrived at by following an iterative design procedure, as the capacity of some individual nodes would be shared between star and ring networks as a result.

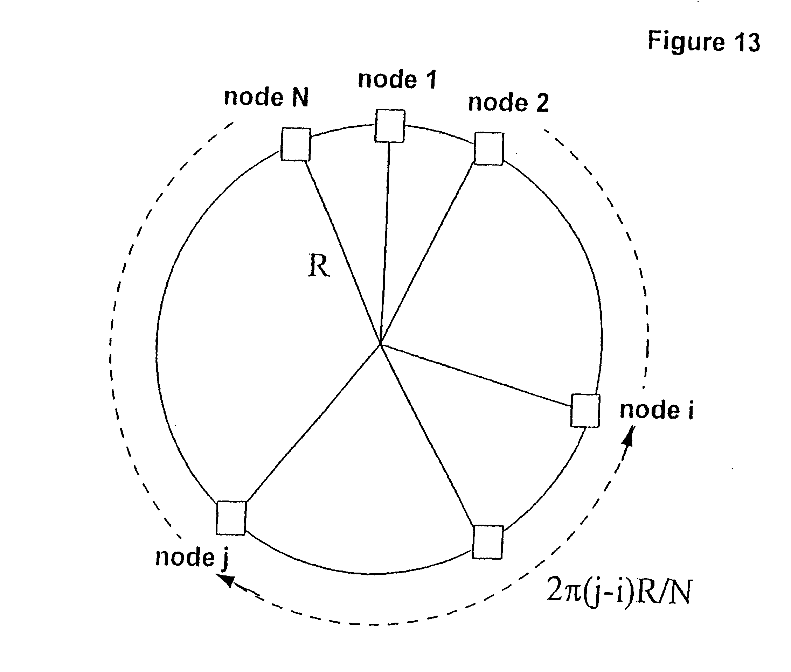

As an example, illustrated in Figure 13, let us consider N nodes uniformly spaced around a circle of radius R, and a uniform matrix of node-node traffic. Consider the traffic between node i and node j. Their physical separation around a WDM ADM ring would be $2\pi(j-i)R/N$. The $node_i$-$node_j$ capacity would have to be doubled for protection, which in effect increases the distance to $4\pi(j-i)R/N$ around a ring. But via the hub of a star network the same traffic would have a distance of 2R to propagate. To a first approximation the $node_i$-$node_j$ traffic should be carried over a ring network instead of the star network for

$$4\pi(j-i)R/N < 2R$$

i.e. for all nodes i,j for which $(j-i) < N/2\pi$, i.e. < 3.5 when N=22.

The precise breakpoint in inter-node distance, to choose between the preferred use of the ring and star networks, will be further modified by the precise amounts of fibre required for the chosen degree of protection in the star network.

Figure 14 shows a network constructed in accordance with these criteria. In this example the network includes both peripheral inter-node connections 141 carrying protection traffic, and also a WDM add/drop ring network 142. Node 1 is programmed to route capacity to Node 3 via the ring network 142, since in that case j-i < 3.5, for this 22 node network. Node 1 routes capacity to node 10 via the hub of the star network, since in that case j-i > 3.5.

In the presently described examples, the communications system forms the core network of a national telecommunications network. Each node is a trunk switch and is connected to a number of digital local exchanges (DLE's) 8a, 8b. The connections between the DLE's 8 and the nodes 2 may include both broadband circuits using, for example, ATM (asynchronous transport mode) and also conventional narrowband circuits for voice telephony. Although for ease of illustration only three nodes are shown, in practice, in the UK core network for example, 23 nodes may be used. Typically, for a system of this size, 12 23x23 routers may be used at the hub of the network.

In use, when a first customer S1 connected to a first DLE 8a makes a call to a second customer S2 connected to a second DLE 8b, then the call is initially set up in a conventional fashion, using network signalling messages to establish a circuit which extends across the core network from the first DLE 8a to the second DLE 8b. The node 2a, which is functioning as a trunk switch, receives signals from the customer S1 via the DLE 8a in the electrical domain. The customer signal is switched electrically to one of the transmitter terminals 501, which it then modulates. For example, in this instance, one of the terminals 501 which are connected to the first optical fibre 101 is selected. The wavelength of operation of the selected terminal is set by a traffic or network management system (automatically, manually or by design), depending on the intended destination nodes. In the case of a 23 node network, 45 different wavelengths within the erbium window, with channel spacing of 0.8nm, may be used across the network. Each group of terminals connected to a single branch of the network uses a respective subset of 23 of the 45 possible wavelengths, providing one wavelength channel for each of the other nodes In this example, the second wavelength channel $\lambda_2$ is selectetd for the transmitter terminal 501. An optical carrier at that wavelength modulated with the signal from the customer S1 is output on fibre 101 to router 301. The router 301 routes signals received at the relevant input port at wavelength $\lambda_2$ to the output port which is connected via optical fibre 104 to node 2b. At node 2b a receiver terminal which is tuned to the $\lambda_2$ channel converts the signal back to the electrical domain. The signal is relayed via DLE 8b to the destination customer S2. Similarly, a connection is established in the reverse direction via fibre 105, router 301, and fibre 106. In this way a duplex circuit is provided between the two customers. Within the core network, the circuit is part of a multiplex of traffic from different customers which is carried between the nodes.

Sometimes, the capacity required on a given fibre such as fibre 105 is less than the maximum capacity which the fibre is capable of carrying. In this case, additional working traffic may be carried to the node from an adjacent node via a peripheral optical transmission path P. This additional working traffic from the adjacent node is then aggregated with the traffic originating at the node in order to make full use of the capacity of the optical fibre connections.

Suitable devices for implementing the transmitter terminals 501 include Distributed Bragg Reflector (DBR) lasers and grating-assisted vertical coupler semiconductor lasers. Such devices are tuneable over a 35nm range within the erbium window. Examples of such devices are disclosed in the present applicant's copending International Patent Application no. PCT/GB 96/02424 (Applicant's Reference A25036). Alternatively, the tuneable source may be in the form of an amplifier and modulator such as those described in D.J. Pratt et al., "Tunable Source Options for Race-2070 Project (MUNDI)" Cost 240 workshop, Marcoussis, France 25th October 1993. This design uses a mechanically tuneable optical filter and a semiconductor amplifier/modulator to select a required wavelength channel from a comb of reference wavelengths which are broadcast form a central location to a large number of terminals.

For the receiver terminals, a tuneable filter is used in combination with a photodiode. The filter may be a mechanically tuned Fabry Perot cavity, an angled interference filter, or a tuneable grating filter.

As so far described, the example assumes that all the network components are functioning normally. However, an important feature of the network is its ability to adapt to component failures. For example, a break might occur in fibre 101 at the pointed indicated by the cross in dashed lines. In this case optical switch 901 is used to bypass the break, allowing the circuit between the two subscribers to be maintained. Alternatively or in addition, signals may be switched within the node so that they are output onto the peripheral transmission path P. The signals then travel on an alternative path to the hub via an adjacent router.

A star network which is constructed in this way is far more resilient than an equivalent WDM ring. In a ring, multiple fibre breaks spread around the ring cause node-node connections to become more and more localised within sections of the ring between pairs of breaks. In a multiple-star structure including peripheral connections around the rim of the network, by contrast, complete recovery from the effects of multiple breaks or failures is possible. At the same time, the network topology makes possible savings in the lengths of fibre required.

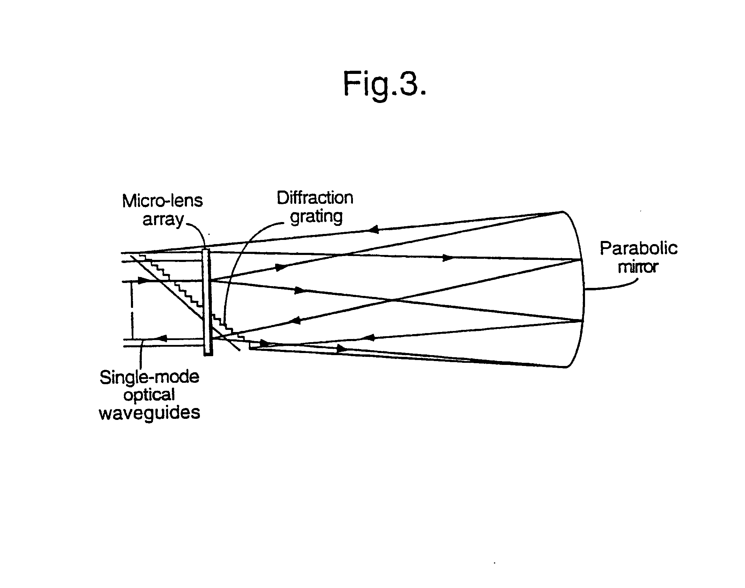

Figure 3 shows a first example of a router which is suitable for use in the networks described above. It comprises a curved mirror which may be parabolic or spherical, a diffraction grating and a linear array of fibres and partially collimating microlenses. To provide nxn connectivity, the device uses two arrays of n monomode optical fibres. As described in further detail in our copending International Application no. WO95/26592, each array is formed by locating fibres in grooves etched in a silicon substrate.

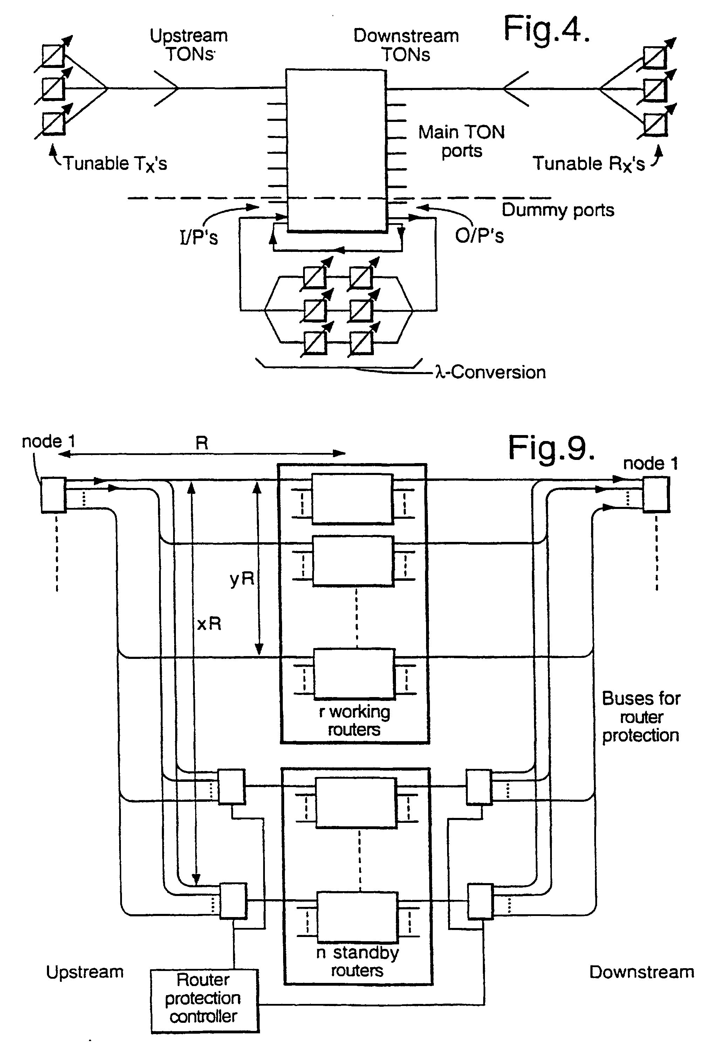

When traffic is uniformly distributed across the network, then an entirely passive router such as that shown in Figure 3 is suitable. When however a nonuniform distribution is expected, for example when one of the nodes is expected to send a relatively higher concentration of traffic to a sub-set of the other nodes, then preferably the router is modified to include dummy ports, as shown in Figure 4. As described in our above-cited application, the dummy ports may be used to carry out wavelength conversion for selected incoming signals, so that, in effect, two or more wavelength channels are assigned to a single route across the network.

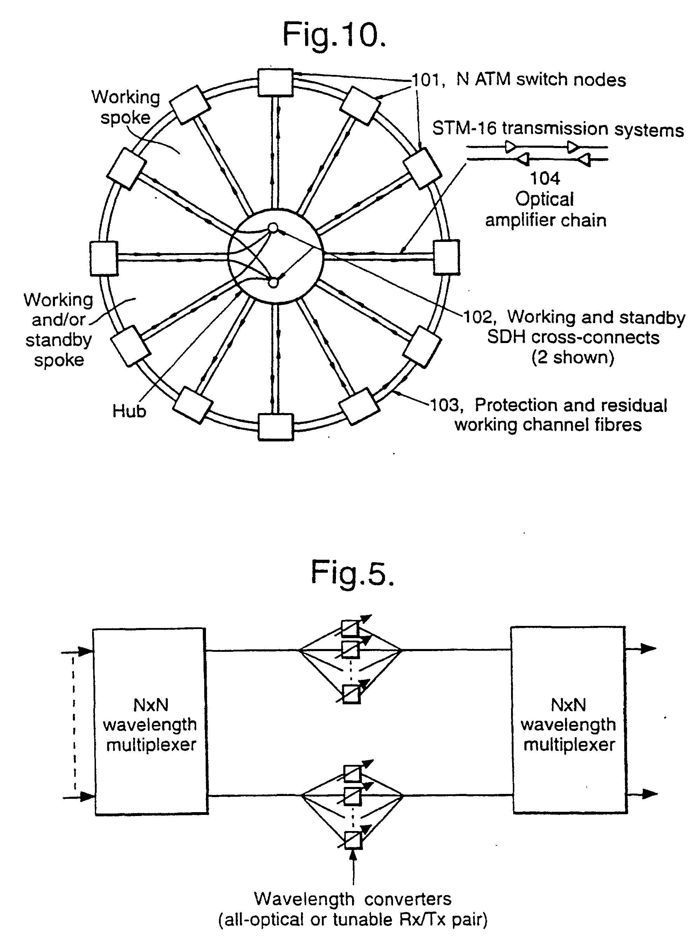

Figure 5 shows an alternative structure for a router, which obviates the need for dummy ports. The router comprises two NxN wavelength multiplexers, with wavelength converters connected between the outputs of one multiplexer and the inputs of the other multiplexer. This structure reduces the number of wavelength channels required and eases fabrication. The wavelength converters may be all-optical devices, or alternatively may comprise pairs of tuneable optoelectronic receivers and transmitters.

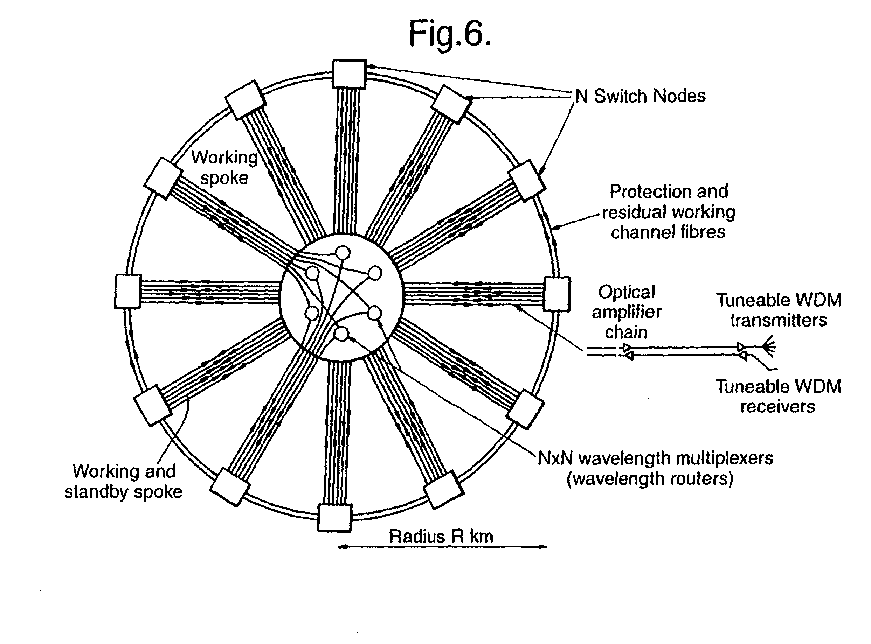

Figure 6 shows a second example of a network for use in a system embodying the present invention. An optical fibre network which has a star topology links N switch nodes to the hub of the network. A plurality of NxN routers R are located at the hub. Groups of optical fibres, which are termed "spokes", carry traffic between the switch nodes and the routers R. In addition to the spokes, peripheral optical fibre connections are connected around the network and provide direct interconnection of adjacent switch nodes. As in the first example described above, the peripheral optical fibre connections provide protection against path failure in a way which minimises the total fibre quantities required by the network. The enlarged detail in Figure 6 shows optical amplifier chains included in the spokes to provide transparent operation. The spoke is terminated at the switch node by tuneable WDM transmitters and receivers.

In the present example, path protection is achieved by providing additional "standby" fibres, that is to say fibres which are additional to those fibres, termed the "working" fibres, needed to carry all the channels of the network when the network is functioning normally. The standby fibres may extend along one or more of the working spokes, as shown in Figure 6. In an alternative arrangement, the standby fibres are grouped together in one or more standby spokes. The standby spoke is then connected to a standby switch which functions only to redirect traffic to/from others of the switch nodes in the event of a path failure. In either arrangement, the network is configured so that the working and standby paths from any switch node to the router is disjoint. In the example of Figure 6, this is achieved by mesh interconnection between the switch nodes and routers. For ease of illustration, connections to and from two only of the spokes are shown.

The working and standby fibre paths may be arranged in the network in different ways depending on the degree of protection against path failure ("path protection") or protection against router failure ("router protection") which is required. If there were just two cable routes leaving a node, then to protect against failure in one route would require the number of optical fibres to be doubled, so that each route carried standby fibres for the other route. Such protection is termed 1:1 fibre protection. However, protection can be achieved at less expense if m of the spokes have standby fibres and the standby fibres are shared between N working spokes to give m:N protection. Possible configurations for the network include: all working traffic from one switch node along one spoke; half along the one spoke and half along an adjacent spoke; one third along the one spoke and one third each along two adjacent spokes. The peripheral optical fibre connections may carry both working traffic and protection traffic: protection traffic is traffic which has been diverted from its usual path in response to a path failure. Additional protection can be achieved if the network has switching flexibility to allow selection of different standby paths in the event of failure, rather than a single predetermined standby path being associated with a given working path.

By carrying working traffic between nodes on the peripheral optical fibre connections, the network ensures maximum utilisation of the network capacity while tending to minimise the amount of optical fibre required. If the number of wavelength channels from a node is such that one fibre is not fully filled, then only fully-filled optical fibres are taken directly to the hub from the node. The other wavelength channels are taken via the peripheral optical fibre connections to one or more of the other nodes, and are there combined with other channels to fill a whole fibre to the hub. A second fibre pair in the peripheral optical fibre connections is used to provide conventional bi-directional ring protection against breaks. The ring is used in both directions simultaneously, so that at most a node-node connection only has to go half way around the ring, instead of all the way. When a break occurs in the ring, traffic approaching the break is diverted back along the ring in the opposite direction around the ring, but propagation is still in both directions at any point around the ring. The direction of propagation is reversed at nodes adjacent to the break. In an alternative implementation, the ring may use one direction only for working traffic.

Another feature of the network is that each and every working node is connected to all the working routers. To enable this, the routers have the same number of ports as the number of nodes N. In implementations where the number of wavelength channels which can be supported by the optical fibres is less than the number of wavelengths employed by the routers, then wavelength conversion is used at the router to map some incoming wavelengths to different wavelength channels.

As described in relation to the first embodiment above, in general a given wavelength channel from one node goes to a particular one of the other nodes. If the capacity required on a connection between a pair of nodes is not an integral multiple of the capacity of a single wavelength channel, then this might lead to under-use of the network capacity. To avoid this, when a given node-node connection requires a capacity, e.g. of 4.5 wavelength channels, the fractional capacity is provided by time-division of one of the wavelength channels. This is implemented, for example, by periodic tuning of a wavelength converter at the router. In this example the port on a wavelength router carrying a 5th wavelength channel is connected to a wavelength converter which is tuned, for half of the time, to a wavelength which allows the optical signal to pass to the same destination node as the other 4 of the 4.5 wavelength channels. For the other half of the time the wavelength converter is tuned so that the channel is thereby switched by the router so as to divert the signal to another node-node connection where a .5 channel capacity is required. The switching is scheduled with respect to a master clock which is distributed between the nodes. Control logic managing traffic at the node selects an appropriate time slot for transmission of signals which form part of the 4.5 wavelength node-node circuit.

Table 1 shows performance parameters for different path protection strategies which may be implemented on the network of Figure 6. The parameters are the fibre increase factor, which is the relative increase in the quantity of fibre required to implement the protection strategy, the proportion of fibre paths (spokes) in the network which can fail simultaneously, and the ratio of these two parameters. This last parameter is a measure of the increase in fibre quantity (and hence the cost) of each unit of protection. The Table includes examples with one working path from each switch node (in which case the peripheral fibre connections carry standby traffic only) and with two working paths from each switch node (in which case the peripheral fibre connections carry working traffic as well as standby traffic)). In this example N, the number of switch nodes, is 23.

Table 1 shows that a large increase in fibre quantities is necessary to ensure protection against a large proportion of simultaneous fibre path failures, as one would expect. Nevertheless, the concomitant fibre increase/unit of protection is at its lowest at this extreme, indicating that the greater the degree of protection, the more efficiently it can be provided. Although fixed standby paths provide very efficient protection, they result in traffic loss when a large proportion of path failures occurs, which flexible standby paths do not. However, since in practice the probability of e. g. half the fibres in a network failing simultaneously is very low, protection is general only required against a small proportion of path failures. For example, to possess protection equivalent to a WDM ring, where fibres are duplicated for protection against a single break, the multiple-star network would need only a single standby path, i.e. m = 1. This single standby path must, however, in this case, use a separate standby spoke. The analysis for Table 1 allows for the worst case where all spoke failures occur in contiguous spokes.

Table 1

| Protection Strategy | Fibre Increase Factor, A | Proportion of Path Failures, B | Increase/Unit of Protection, A/B |
|---|---|---|---|
| 1 working path, 1:N protection, flexible standby, no traffic loss | 1.32 | 0.043 | 30.3 |
| 1 working path, N/4:N protection, flexible standby, no traffic loss | 2.51 | 0.20 | 12.5 |
| 1 working path, N/3:N protection, flexible standby, no traffic loss | 2.90 | 0.25 | 11.6 |
| 1 working path, N/2:N protection, flexible standby, no traffic loss | 3.59 | 0.33 | 10.8 |
| 1 working path, N:N protection, flexible standby, no traffic loss | 5.14 | 0.50 | 10.3 |
| 2 working paths, 1:2 protection, fixed standby, 25% traffic loss | 1.77 | 0.50 | 3.5 |
| 2 working paths, N:2N protection, flexible standby, no traffic loss | 3.59 | 0.33 | 10.8 |

In the preferred implementation adopted here, the network is configured for m:N path protection, with all working fibres taken directly to the hub along N spokes, and additional standby fibres taken along m of the spokes. A further increase in fibre quantities is needed to account for the peripheral fibre connections which carry the protection traffic. The overall increase in fibre quantities for m:N protection is given by: m:N path protection (non-diverse) fibre increase factor,

$$A = 1 + m/N + m\pi/N$$

m:N path protection (diverse) fibre increase factor,

$$A = 1 + m/N + m2\pi/N$$

and for m = 1 (allowing 1 spoke failure without loss of traffic)
1:N path protection (diverse) fibre increase factor,

$$A = 1 + 1/N + 2\pi/N$$

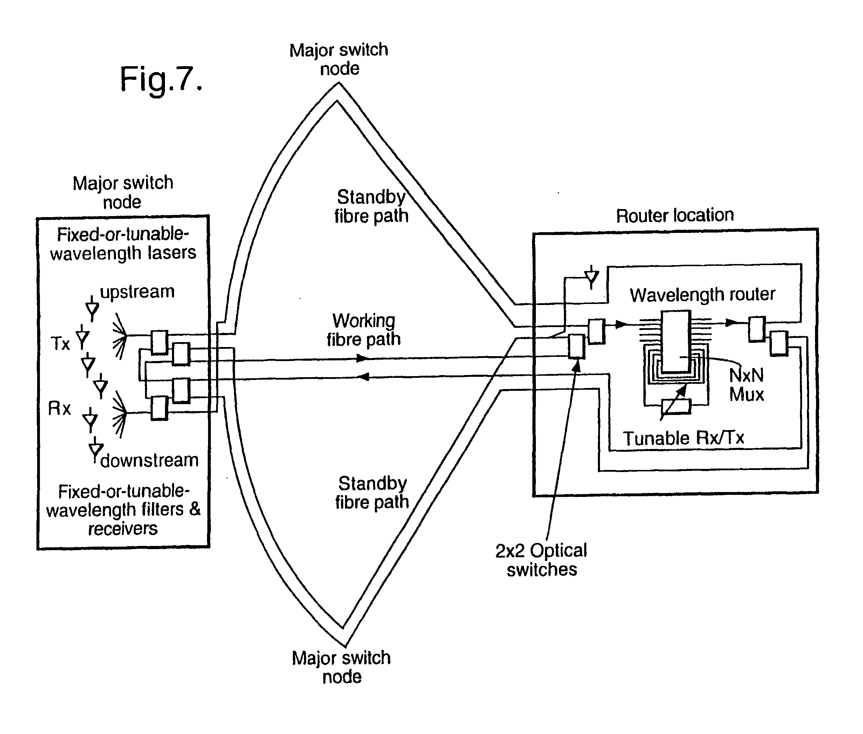

Figure 7 shows in further detail the switching arrangements at one of the switch nodes when the network of Figure 6 is configured for m:N path protection. Working traffic is carried directly from the switch node to the router at the hub along one of the spokes. If the working path fails, traffic is switched either way around the peripheral fibre connections to a node with an available standby fibre, and is then directed via a path to the router along a respective spoke. 2x2 optical switches sw in the switch node are configured so that when a node is not making use of standby fibres for its own protection, then protected traffic from other switch nodes received on the peripheral fibre connections passes straight through the switch node. The switching arrangement illustrated in Figure 7 may be elaborated to handle multiple sets of standby fibres in the peripheral connections, and to handle standby fibres, in addition to working fibres, in a respective spoke.

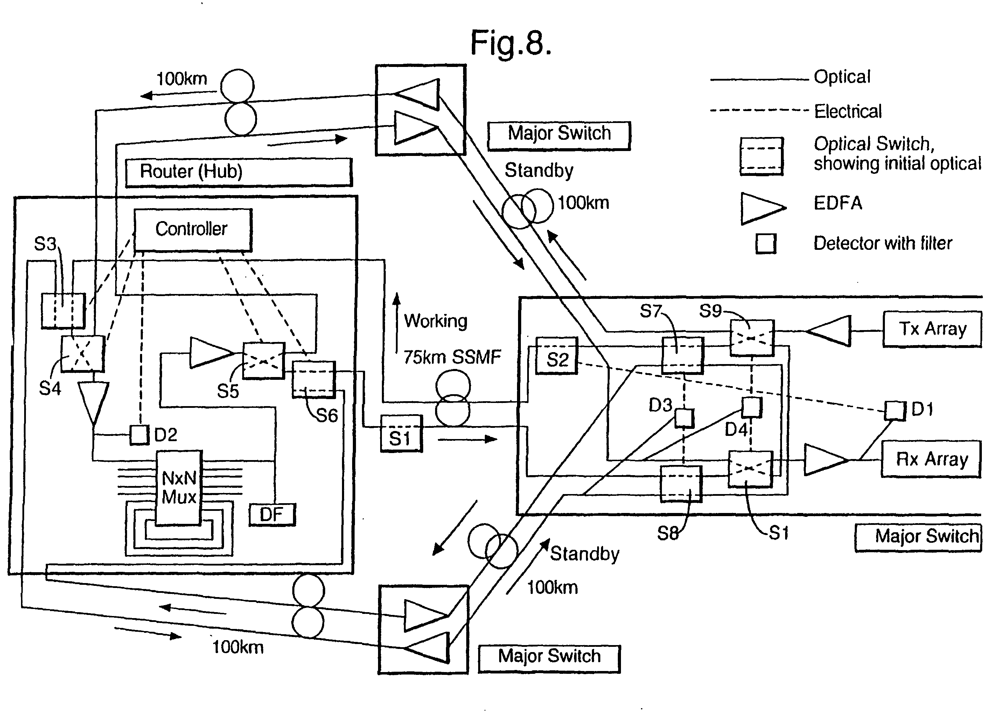

Figure 8 shows an experimental implementation of the arrangement shown schematically in Figure 7. In this implementation the hub contains a 22 x 22 wavelength router, described in further detail below, together with a personal computer which is used to control electromechanical optical switches which are deployed around the wavelength router, to provide path protection switching. The hub is linked via a 75km go and return path to a major switch node, and via 2 separate 200km standby paths. The standby paths traverse nominal major switch nodes, which contain optical amplifiers. The fibre links include attenuators to provide between 25 and 27dB path loss: this corresponds to the extra loss that would be present in a typical installed fibre link. Switch losses in the 2x2 optical switches are between 0.5dB and 3dB, depending on position. Typical amplifier output powers are + 14dBm to + 17dBm. The optical SNR (signal/ noise ratio) at the receiver is typically better than 20dB in a 0.1 nm bandwidth. The major switch node contains a 16 wavelength WDM transmitter, covering the range from 1547.74nm, to 1560.55nm, with 100GHz channel spacing. Individual channel wavelengths are optimised for transmission through the router. The WDM transmitter is externally modulated at a bit rate of 2.5Gb/s for the purposes of measurement. The receiver array is represented by the combination of a variable attenuator, mechanically tuneable filter with 0.5nm FWHM bandwidth, and an APD receiver. Typical attenuations well in excess of 20dB are required to reduce the power from the preceding EDFA to the level required for a 1 in $10^9$ error rate at the receiver for both working and standby paths. Thus, a sufficient power budget exists to accommodate a 16-way splitter (approx 13dB) and 16 tuneable receivers incorporated into a fully functioning network.

In this example, a m:N path protection strategy was implemented as follows. To simulate a fibre break, switch S1, on the working path between the hub and the operating major switch node, was operated to open this path. The switch was positioned close to the hub, to maximise the deleterious effects of propagation delay. At the receiver an optoelectronic detector D1 is filtered to monitor a wavelength known to originate from this node. This detector then detects the reduction in power caused by the simulated break. The detection of this reduction in power causes a 2x2 optical switch S2 on the transmit side of the node to be thrown.

A time constant of at least 125μs is associated with detector D1. This time constant, which corresponds in length to one SDH (Synchronous Digital Hierarchy) frame, acts as a persistence check to ensure that a real break has been detected. In the present implementation an effective time constant of a few ms was used. After S2 has been thrown, the loss of transmit signal, after propagation back to the hub, is detected by another photoelectric detector D2, which is loosely filtered to discriminate against ASE (amplified spontaneous emission) from the EDFA's (erbium doped fibre amplifiers). When this loss is detected, the information is sent as a TTL signal to a small personal computer (PC), which contains a control algorithm to detect the TTL transition and choose an appropriate spare path, based on knowledge of the network condition. The present implementation of this control algorithm can handle up to 8 nodes, and has a response time of 800μs on a 386 PC. Depending on the choice of standby path made by the control algorithm, then the appropriate switches are thrown. For example, for Standby Path 1, switches S4 and S5 are thrown. An additional DFB (distributed feedback) laser, which may operate outside the main band occupied by the WDM channels, is placed at the hub. This additional DFB laser generates a probe signal for use in the path restoration process. This signal propagates down the standby path to the switch node. At the switch node the signal is detected by a photoelectric detector D4. This detector, which ideally has a faster response time, around 10μs, causes switches S9 and S10 at the node to switch, and so brings the standby path into operation. Finally, after propagating back around the standby path, the presence of the restored signals is detected once again by D2, which informs the controller that the restoration path is intact. Full restoration only occurs when these signals propagate back to the node, down the standby path (representing propagation via the wavelength router to all other nodes in the network).

In the present example, the wavelength multiplexer which is used as the router is a 22x22 port router with a channel spacing of 0.8 nm. It employs a Stimax (TRADEMARK) multiplexer configuration with a double array of N fibres to provide an NxN WDM multiplexer. The Stimax multiplexer is commercially available from Jobin-Yvon - Spex . The device provides a maximised ratio of channel width to channel spacing using single-mode fibres (typical FWHM of 0.21 nm) and losses are below 4 dB. The router has a polarisation sensitivity of between 0.3dB and 0.8dB, depending on wavelength and path through the router. The range of wavelengths routed from any input 1 to 22 to any output 1 to 22 is given in the following matrix (Table 2). The design minimises wavelength errors between the wavelengths of the ITU frequency standard and the channel centre wavelengths. The maximum residual error is 0.04 nm over the wavelength range 1538-1560 nm when the multiplexer is heated to 28.1°C. The router has half connectors attached to all 44 fibre tails, and is housed within a thermally controlled environment, in order to raise its temperature, and thereby minimise the wavelength errors.

| IN / OUT | 1 | 2 | .. | 9 | 10 | 11 | .. | 20 | 22 |
|---|---|---|---|---|---|---|---|---|---|
| 1 | 1563.73 | 1562.95 | | | | | | 1548.53 | 1546.94 |
| 2 | 1562.95 | 1562.15 | | | | | | 1547.74 | 1546.14 |
| : | | | | | | | | | |
| 9 | | | | 1550.95 | | 1549.33 | | | |
| 10 | | | | | 1549.33 | | | | |
| 11 | | | | 1549.33 | 1548.53 | 1547.74 | | | |
| : | | | | | | | | | |
| 19 | 1549.33 | 1548.53 | | | | | | 1534.14 | 1532.53 |
| 22 | 1546.94 | 1546.14 | | | | | | 1531.72 | 1530.13 |

Table 2: Extract from 22x22 Wavelength Multiplexer Routing Matrix

Router protection in the network of Figure 6 will now be described. As in the first embodiment, the capacity of each switch node is shared between a number r of routers and each router carries a fraction 1/r of a respective switch node's traffic. However, in the present example, rather than using standby fibres for router protection running directly from switch nodes, or using wavelength channel switching, connections for standby paths for router protection are made to and from working fibres in a region which is closer to the hub than to the switch nodes, but which is far enough away from respective working routers to be unaffected by localised causes of failure (such as fire or other physical damage). The connections to the working fibres may be by way of switches or by spitting/combining. Optical fibre paths extend from the working fibres to standby routers a distance $xR < < R$, where R is the distance of the working fibre path from a switch node to a working routers. In implementations where splitting/combining is employed, then the standby routers themselves switch in fibres from failed routers. In such implementations, if the standby fibres from the splitters/combiners to the standby routers are arranged in a star topology, then the increase in fibre lengths for implementing the router protection strategy is given by a factor of 1 +xn (where n is the number of standby routers).

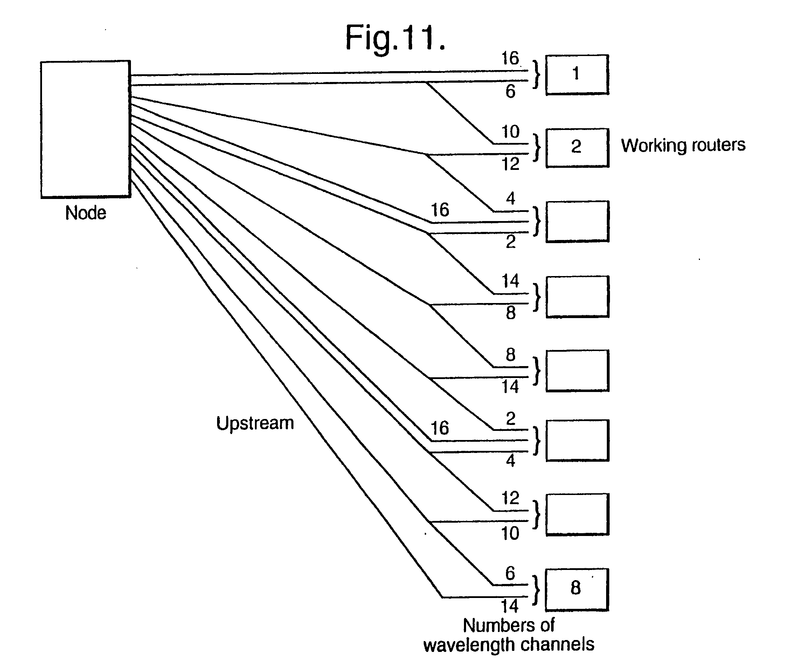

In an alternative and preferred implementation, instead of a star topology being used for the connection between the splitters/combiners and the standby routers, a bus topology is used. As shown in Figure 9, the optical fibre bus runs across the working fibre paths at a distance from the routers such that the maximum path length via the bus to a standby router is xR. Working fibre paths are joined to the optical fibre bus by splitters/combiners sequentially along the bus. To provide enhanced resilience, duplicate optical fibre buses are used, with each bus taking a different physical route. Using duplicate buses, the additional fibre required for router protection is given by 1 + 2x. If only a single bus is used, then the relevant factor is 1 + x. In this implementation, each standby router requires a number 2N of rx1 optical switches. Each rx1 switch enables a fibre connected to any of r router locations to be switched to one of the n standby router locations. In use, when a working router fails, all the fibres from all the switch nodes connected to that working router can then be switched to one of the n standby router locations.

As a further alternative, instead of connections to the working fibre being by way of fixed splitters/combiners, switching is employed using an rx(r+n) optical switch at the connection to each working fibre (where r is the number of working routers and n is the number of standby routers). Failure at the rx(r+n) switch site may be treated as a path failure, and is then encompassed by the path protection scheme outlined above, using a standby spoke. In this case, the increase in fibre lengths for the router protection scheme is given by a factor 1 + xn/r

In operation, using either of the router protection strategies described above, the router carries out self-diagnostic tests. This include monitoring power levels and the presence of individual wavelength channels on each of the incoming and outgoing optical fibres. When, as a result of these tests, a router failure is detected, then a message is sent to all other routers, both working and standby. Supervisory signals are sent between routers and/or between routers and one or more centralised locations, so that all routers and/or control logic at the centralised location(s) are aware of the status of all routers. In one implementation, supervisory signals are sent over a separate data communication network (DCN). Alternatively the supervisory signals may be sent over the fibre infrastructure described above. Signals are sent sufficiently frequently from each router, or alternatively continuously, so that the disappearance of a supervisory signal is used as a fast indication of router failure, for example within 0.5 msec. When a router fails, a supervisory signal is turned off. This may be done under the control of the router in response to the detection of a failure, or may be direct result of the failure. Control logic, which may be implemented on a control processor at a centralised location or may be distributed between the router sites, selects a free standby router to take over from the failed router. The time taken for the selection of a standby router in response to a router failure is short, e.g. a few milliseconds. Propagation delays are small since standby routers are at most xR from the working routers, where xR may have a value, e.g., of 10km.

The control of router protection and path protection are interdependent. A node may interpret router failure as a path failure (unless path protection is only implemented if all fibres arriving at a node from all routers along one path fail simultaneously). Before a path protection controller can begin the setting up of a protection path it checks with the router protection controller that router failure is not the cause.

The invention is not limited to implementation using NxN WDM routers. For example, each NxN router in the above examples may be replaced by a full-scale optical cross-connect. Nor is the invention limited to use with WDM technology. Figure 10 shows an implementation using SDH (synchronous digital hierarchy) technology. Where the previous examples use working and standby wavelength routers, whose task is to route individual wavelength channels from a given node to any other node in the network, their place is taken in this example by working and standby SDH cross-connects, whose task is now to route SDH systems from a given node to any other. The granularity of the routed SDH systems is optional, depending on the traffic matrix between the nodes. For example, the network may carry individual 2 Mbit/s channels, or STM-1 channels, STM-4 channels, STM-16 channels etc. If the traffic matrix is uniform, then ideally the granularity of the channels within a fibre matches the number of nodes to be connected to (i.e. N-1). For example, if each fibre carries only one STM-16 system (as indicated in the figure), and the SDH cross-connect only has STM-1 switching granularity, then N =17 nodes is ideal.

Although wavelength routing is not used in this SDH example, it is still possible for WDM to be employed just for transmission capacity purposes within the fibres between the ATM switch nodes and the SDH cross-connects. For example, each fibre could support 16 STM-16 systems, or 16 STM-64 systems using 16-channel WDM within the fibre. At the SDH cross-connects the wavelength channels are converted to and from electrical signals.

As in the wavelength-routed use of the multiple-star network, any residual channels from a node that are insufficient to fill a complete fibre from the node to the SDH cross-connects at the hub are transmitted around the perimeter of the network to an adjacent or further node, until they can be multiplexed with other nodes' channels to fill a fibre to the hub. The perimeter is also used for path protection purposes. Although wavelength routing is not available in this case, the protection channels could still be switched around the perimeter by means of optical switches. Alternatively, the ATM switches themselves may fulfil this purpose. As a further alternative, additional SDH cross-connects or add-drop multiplexers (ADMs) are connected to the ATM switches for this purpose. The residual channels are switched by either the ATM switches or by associated SDH cross-connects or ADMs.

All the topological structures and operational principles described previously, including the protection strategies, apply to this SDH example, albeit with some differences in the details of implementation. The multiple-star network structure employing SDH cross-connects requires less fibre than an SDH ring.

Port-port connections in one or more of the hub SDH cross-connects are time-shared in order to provide the exact node-node capacity, or close to that capacity. Suppose, for example, that each fibre from a node carries an STM-16 system (2.48 Gbit/s), and that an STM-1 channel (155 Mbit/s) is routed by each SDH cross-connect to every other node (i.e. N =17 nodes, uniform traffic matrix between nodes). If now the capacity between each node pair is assumed not to be sufficient to fill all STM-1 channels, then one of the STM-1 channels, instead of being dedicated between one input port and one output port of a cross-connect, will have smaller units of capacity, e.g. 8 Mbit/s (4 off 2Mbit/s), switched to multiple output ports by the cross-connect. Similarly multiple input ports would be multiplexed into one output port for the return path.

As a further alternative, another implementation may use a conventional optical cross-connect as the router in combination with fixed-wavelength WDM at the nodes.

Figure 11 shows an example of the distribution of wavelength channels between different routers in networks such as those described above. Connections from one node only are shown, for ease of illustration. In this example:

N = 23 nodes, L =16 wavelengths/fibre

C (capacity) =10 Tbit/s, B (bit rate) = 2.5 Gbit/s

Every node must send N-1 = 22 wavelengths to each router

C/(N(N-1)B) = 7.905 wavelengths between node pairs, hence r=8 working routers

C/NB = 173.91 = 174 wavelength channels from each node

C/NBL = 10.87 = 11 fibres from each node

In this example, therefore, 7 out of 11 fibres need wavelength channels to be coupled to/from the next router (upstream and downstream)

As shown in Figure 11, two fibres, each capable of carrying 16 channels, extend from a node to working router number 1. Since the node can take 22 channels, 10 channels are left. A tap from one of the two fibres, in a region which is closer to the router than to the node, is connected to inputs of another working router, in this case the adjacent router no. 2. The 10 wavelengths from the tap together with 12 wavelengths from the next fibre fill working router number 2, leaving 4 channels from that next fibre to be carried on, via another tap, to working router number 3 and so on.

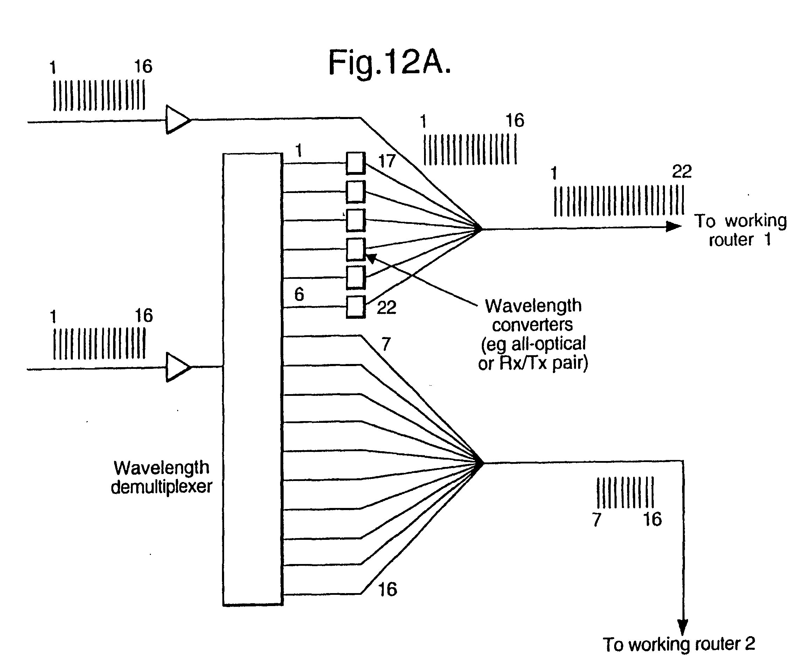

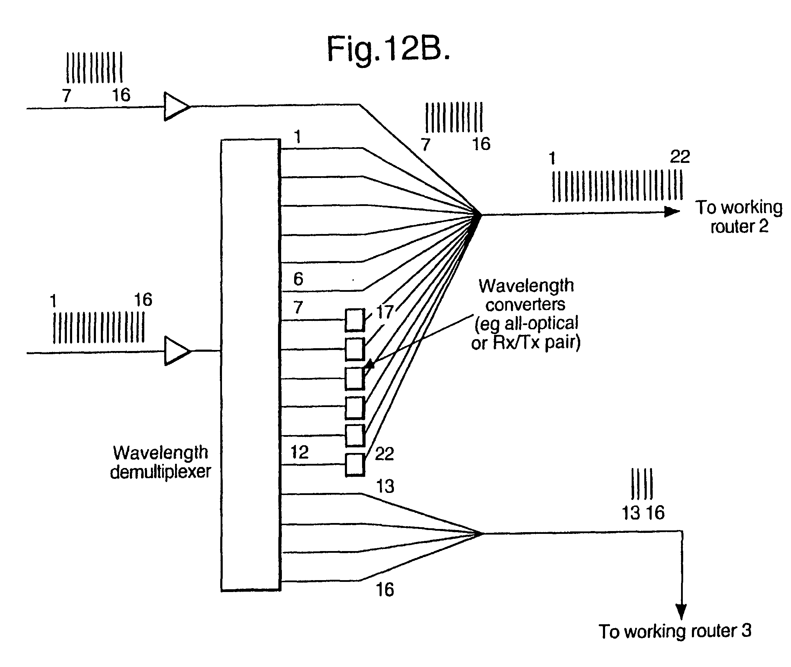

Figure 12A shows the use of a wavelength multiplexer at the tap adjacent to router 1 to couple 10 wavelength channels, that is channels 7 to 16, to working router 2. Figure 12B shows the equivalent arrangement at the tap adjacent to working router 2.

**Claims**

1. An optical communications system comprising:

   a) an optical network having a star topology;
   b) a plurality of nodes (101) which are located at the periphery of the optical network having a star topology, and which are arranged to communicate optical signals with other of the said nodes via said optical network;
   c) routing means (102) connected via the said network to the plurality of nodes and located at the hub of the said network; and
   d) an optical ring network (142) interconnecting at least some of the said plurality of nodes; said system being **characterised in that**:

   one or more of the said plurality of nodes is arranged to direct traffic for another of the said nodes which is separated from the said node by less than a predetermined distance via the said optical ring network, and to direct traffic for another of the said nodes which is separated from the said node by more than the predetermined distance via the optical network having a star topology.

2. A system according to claim 1, in which the optical ring network is an add/drop wavelength division multiplexed ring network.

3. A system according to claim 1 or 2 further comprising peripheral transmission paths interconnecting at least some of the plurality of nodes and arranged to carry traffic which has been diverted from its usual path in the event of failure of a component in the optical communications system.

4. A method of operating an optical communications system comprising a plurality of nodes interconnected by an optical network, the method including :

a) when a source node and destination node are separated by more than a predetermined distance, then directing optical signals from the source node to the destination node via routing means located at the hub of the optical network having a star topology; and

b) when a source node and destination node are separated by less than a predetermined distanced, then directing optical signals from the source node to the destination node via a ring network which connects two or more of the said nodes.

**Patentansprüche**

1. Optisches Kommunikationssystem mit:

   a) einem optischen Netz mit einer Stern-Topologie;
   b) mehreren Knoten (101), die am Rand des optischen Netzes mit Stern-Topologie angeordnet sind und die dazu dienen, optische Signale mit anderen Knoten über das optische Netz auszutauschen;
   c) Router-Einrichtungen (102), die über das Netz mit den mehreren Knoten verbunden sind und bei der Hub-Einrichtung des Netzes angeordnet sind; und
   d) einem optischen Ringnetz (142), das wenigstens einige der mehreren Knoten miteinander verbindet,

   **dadurch gekennzeichnet, dass**
   einer oder mehrere der mehreren Knoten dazu dienen, Verkehr für einen anderen der Knoten weiterzuleiten, der von dem Knoten um weniger als ein vorgegebener Abstand über das optische Ringnetz entfernt ist, und Verkehr für einen anderen der besagten Knoten weiterzuleiten, der von dem besagten Knoten um mehr als der vorgegebene Abstand über das optische Netz mit Stern-Topologie entfernt ist.

2. System nach Anspruch 1, bei dem das optische Ringnetz ein add/ drop- Wellenlängenmultiplex -Ringnetz ist.

3. System nach Anspruch 1 oder 2, das außerdem Übertragungspfade am Rand umfasst, durch die wenigstens einige der mehreren Knoten miteinander verbunden werden und die dazu dienen, Verkehr, der bei Fehlfunktion einer Komponente in dem optischen Kommunikationssystem von dem gewöhnlichen Pfad abgeleitet wurde, zu übertragen.

4. Verfahren zum Betreiben eines optischen Kommunikationssystems mit mehreren Knoten, die durch ein optisches Netz miteinander verbunden sind, das aufweist:

   a) Weiterleiten von optischen Signalen von dem Quellknoten zu dem Zielknoten über Router-Einrichtungen in der Hub-Einrichtung des optischen Netzes mit Stern-Topologie, wenn ein Quellknoten und ein Zielknoten um mehr als ein vorgegebener Abstand über das optische Ringnetz voneinander entfernt sind, und
   b) Weiterleiten von optischen Signalen von dem Quellknoten zu dem Zielknoten über ein Ringnetz, das zwei oder mehrere der besagten Knoten miteinander verbindet, wenn ein Quellknoten und ein Zielknoten um weniger als ein vorgegebener Abstand voneinander entfernt sind.

**Revendications**

1. Système de communications optique comprenant :

   a) un réseau optique ayant une topologie en étoile ;
   b) une pluralité de noeuds (101) qui sont situés à la périphérie du réseau optique ayant une topologie en étoile, et qui sont conçus pour communiquer des signaux optiques à d'autres desdits noeuds via ledit réseau optique ;
   c) des moyens d'acheminement (102) connectés via ledit réseau à la pluralité de noeuds et situés au niveau du concentrateur dudit réseau ; et
   d) un réseau en anneau optique (142) interconnectant au moins certains de ladite pluralité de noeuds ; ledit système étant **caractérisé en ce que** :

      une ou plusieurs de ladite pluralité de noeuds est conçue pour orienter le trafic vers un autre desdits noeuds qui est séparé dudit noeud d'une distance inférieure à une distance prédéterminée via ledit réseau en anneau optique, et pour orienter le trafic vers un autre desdits noeuds qui est séparé dudit noeud d'une distance supérieure à la distance prédéterminée via le réseau optique ayant une topologie en étoile.

2. Système selon la revendication 1, dans lequel le réseau optique en anneau est un réseau en anneau multiplexé en longueur d'onde à insersion-extraction.

3. Système selon la revendication 1 ou 2 comprenant en outre des trajets de transmission périphériques interconnectant au moins certains de la pluralité de noeuds et conçus pour supporter le trafic qui a été dévié de son trajet habituel en cas de panne d'un composant dans le système de communications optique.

4. Procédé de fonctionnement d'un système de communications optique comprenant une pluralité de noeuds interconnectés par un réseau optique, le procédé comprenant :

a) lorsqu'un noeud source et un noeud de destination sont séparés d'une distance supérieure à une distance prédéterminée, l'orientation des signaux optiques depuis le noeud source vers le noeud destination via des moyens d'acheminement situés au niveau du concentrateur du réseau optique ayant une topologie en étoile ; et

b) lorsqu'un noeud source et un noeud de destination sont séparés d'une distance inférieure à une distance prédéterminée, l'orientation des signaux optiques depuis le noeud source vers le noeud de destination via un réseau en anneau qui connecte deux ou plusieurs desdits noeuds.

# Fig.1.

## PRIOR ART

EP 1 050 130 B1

Fig.2.

# Fig.3.

Micro-lens
array

Diffraction
grating

Parabolic
mirror

Single-mode
optical
waveguides

Fig.4.

Upstream TONs

Downstream TONs

Tunable Tx's

Main TON ports

Tunable Rx's

I/P's

O/P's

Dummy ports

λ-Conversion

Fig.9.

node 1

R

node 1

yR

xR

r working routers

Buses for router protection

n standby routers

Upstream

Router protection controller

Downstream

# Fig.10.

101, N ATM switch nodes

STM-16 transmission systems

104
Optical
amplifier chain

Working
spoke

Working
and/or
standby
spoke

Hub

102, Working and standby
SDH cross-connects
(2 shown)

103, Protection and residual
working channel fibres

# Fig.5.

NxN
wavelength
multiplexer

NxN
wavelength
multiplexer

Wavelength converters
(all-optical or tunable Rx/Tx pair)

# Fig.6.

N Switch Nodes

Working spoke

Protection and residual working channel fibres

Optical amplifier chain

Tuneable WDM transmitters

Tuneable WDM receivers

NxN wavelength multiplexers (wavelength routers)

Working and standby spoke

Radius R km

EP 1 050 130 B1

Fig.7.

Major switch node

Major switch node

Major switch node

Major switch node

Fixed-or-tunable-wavelength lasers

upstream

Tx

Rx

downstream

Fixed-or-tunable-wavelength filters & receivers

Standby fibre path

Working fibre path

Standby fibre path

Router location

Wavelength router

NxN Mux

Tunable Rx/Tx

2x2 Optical switches

EP 1 050 130 B1

# Fig.8.

**Legend:**
- ———— Optical
- – – – – – Electrical
- Optical Switch, showing initial optical
- ▷ EDFA
- ☐ Detector with filter

100km

Major Switch

Standby

100km

Router (Hub)

Controller

S3

S4

S5

S6

D2

NxN Mux

DF

S1

Working

75km SSMF

S2

S7   S9

Tx Array

D3

D4

D1

Rx Array

S8   S1

Major Switch

Standby

100km

Major Switch

100km

Standby

EP 1 050 130 B1

# Fig.11.

Node

Upstream

16
6
} 1

10
12
} 2     Working routers

16   4
2
}

14
8
}

8
14
}

16   2
4
}

12
10
}

6
14
} 8

Numbers of
wavelength channels

EP 1 050 130 B1

Fig.12A.

Wavelength demultiplexer

Wavelength converters (eg all-optical or Rx/Tx pair)

To working router 1

To working router 2

EP 1 050 130 B1

# Fig.12B.

7    16

1    16

7    16

1    22

To working
router 2

1

6

7    17

Wavelength
converters
(eg all-optical
or Rx/Tx pair)

12    22

13

16

13 16

To working router 3

Wavelength
demultiplexer

EP 1 050 130 B1

Figure 13

node 1

node N

node 2

$R$

node i

node j

$2\pi(j-i)R/N$

EP 1 050 130 B1

WDM ADM ring fibres, 142

Figure 14

node 1

$C_{i\text{-}j}$ is capacity from node i to nod j

$C_{1\text{-}3}$

node 3

star protection & residual channel fibres, 141

node 20

node 5

star hub

$C_{1\text{-}10}$

node 15

node 10

EP 1 050 130 B1